(19) Europäisches Patentamt
European Patent Office
Office européen des brevets

(11) Publication number: **0 507 576 A1**

# (12) EUROPEAN PATENT APPLICATION

(21) Application number: **92302894.8**

(51) Int. Cl.$^5$: **C08K 5/09**, C08L 23/12

(22) Date of filing: **02.04.92**

(30) Priority: **02.04.91 JP 94991/91**
**19.06.91 JP 173329/91**
**16.12.91 JP 351725/91**

(43) Date of publication of application:
**07.10.92 Bulletin 92/41**

(84) Designated Contracting States:
**DE FR GB NL**

(71) Applicant: **TOSOH CORPORATION**
**No. 4560, Kaisei-cho, Shinnanyo-shi**
**Yamaguchi-ken 746 (JP)**

(72) Inventor: **Fujitani, Masahiro**
**4-1, Betsumei 3-chome**
**Yokkaichi-shi, Mei-ken (JP)**
Inventor: **Imaichi, Osamu**
**11-7, Minami-Ikaruga-cho**
**Yokkaichi-shi, Mei-ken (JP)**

(74) Representative: **Sheard, Andrew Gregory et al**
**Kilburn & Strode 30, John Street**
**London WC1N 2DD (GB)**

## (54) Polypropylene-based resin compositions.

(57) A polypropylene-based resin composition containing 0.001 to 10.0 parts by weight of benzoic acid with or without substituent(s) on its benzene ring and/or an acid anhydride of benzoic acid, with or without substituents on its benzene rings, to 100 parts by weight of a polypropylene-based resin is disclosed. The resin can generate mouldings with improved rigidity or transparency.

EP 0 507 576 A1

The present invention relates to a polypropylene-based resin composition. In more detail, it relates to a polypropylene-based resin composition that may allow the manufacture of mouldings with remarkably improved rigidity or transparency.

Polypropylene is used in various fields that make the best use of its excellent features such as mouldability, mechanical characteristics, electrical characteristics and solvent resistance. With extensions in the fields of use of polypropylene, however, the performance required from the market has become higher and thus improvements have been made. In particular, recently the production of polypropylene with high performance has progressed and improvements as far as rigidity and naturally poor transparency are concerned have been vigorous. In one of the methods for improving aspects such as physical properties, the method includes adding a nucleating agent to the polypropylene, which has now been widely adopted. Even now, however, mouldings that are excellent in rigidity or transparency have not been achieved.

Moreover, polypropylene-based resins have been polymerized conventionally mainly by using $TiCl_3$-type Ziegler-Natta catalysts. However, a Ti catalyst supported on a magnesium compound carrier of high-activity and high-stereoregular catalytic activity has been developed, and processes not requiring post-treatments such as extraction of atactic polymer or low-molecular weight polymer and deashing of the catalyst residue have also become possible.

Since polymers produced with different catalyst types or using different processes have differences in their components and in the quantities of catalyst residue, stereoregularity, molecular weight distribution, etc.) these differences affect durabilities such as heat and light stability, colour and odour and mechanical properties such as rigidity, impact strength and transparency of the mouldings. For this reason, the development of additives suitable for polymerization catalysts and their preparation processes, and investigations into additive formulations, polymer processing technologies and the like, are desirable.

One purpose of the present invention is to provide a polypropylene-based resin composition which may have excellent rigidity or transparency.

As a result of diligent investigations in view of the problems described above, the inventors have found that it is possible to remarkably improve the rigidity and/or transparency of polypropylene-based resins by adding benzoic acid, or a derivative thereof, and/or an acid anhydride of benzoic acid, or a derivative thereof, to the polypropylene-based resin.

In a first aspect the present invention relates to a polypropylene-based resin composition containing from 0.001 to 10.0 parts by weight, based on 100 parts of the polypropylene resin, of a benzoic acid compound and/or a benzoic acid anhydride compound, where the benzene ring(s) in either or both of the compounds may or may not be substituted.

The "benzoic acid compound" includes not only benzoic acid itself but also derivatives thereof. Suitable derivatives include those where the ring is (preferably mono- such as para-) substituted with a $C_{1-8}$ alkyl (e.g. methyl, ethyl, propyl and especially butyl), amino or nitro group or a halogen (e.g. fluorine or chlorine) atom.

The "benzoic acid anhydride compound" includes not only benzoic acid anhydride itself (phenyl-CO-O-CO-phenyl) but also derivatives thereof. Such derivatives may have one or both phenyl rings substituted (preferably mono-, such as para-substituted). Substituents include a halogen (e.g. fluorine or chlorine) atom or a $C_{1-8}$ alkyl (e.g. methyl, ethyl, propyl and especially butyl), amino or nitro group. Suitably one phenyl group will be unsubstituted.

Here "polypropylene based" resins can be thought of as those comprising polypropylene repeating units or those comprising units polymerised using propylene monomers.

Preferably the polypropylene-based resin is a resin polymerised with a catalyst containing magnesium, titanium and a halogen.

The invention thus preferably relates to a polypropylene-based resin composition containing from 0.001 to 10.0 parts by weight, such as from 0.05 to 3.0, and optionally from 0.10 to 0.20, of at least one of benzoic acid, or a ring substituted derivative thereof (that is, a benzoic acid compound with or without substituent(s) on its benzene ring) represented by the following general formula:

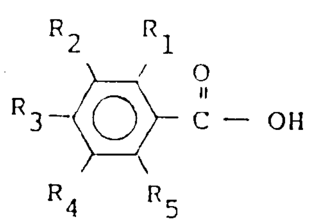

I

wherein each of $R_1$ to $R_5$ individually represent a hydrogen or halogen atom, a $C_{1-8}$ alkyl, a $C_{1-8}$ alkoxy, trihalogenomethyl, hydroxy, amino, di($C_{1-5}$)alkylamino, nitro or phenyl group; and/or at least one of a benzoic acid anhydride or a ring-substituted derivative thereof (that is, benzoic acid anhydride derivatives with or without substituent(s) on the benzene ring) represented by the following general formula:

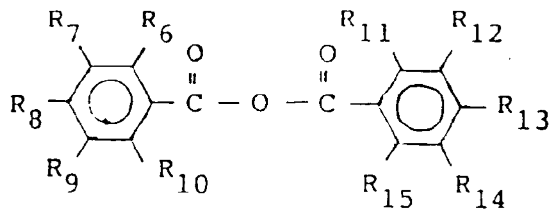

II

wherein each of $R_5$ to $R_{15}$ individually represent a hydrogen or halogen atom, a $C_{1-8}$ alkyl, $C_{1-8}$ alkoxy, trihalogenomethyl, hydroxy, amino, di ($C_{1-5}$) alkylamino, nitro or phenyl group; to 100 parts by weight of the polypropylene-based resin.

The polypropylene-based resins that can be used in the invention are not particularly limited, but those having a melt flow rate (MFR) measured at 230°C under a load of 2.16 kg of from 0.1 to 100 g/10 min and/or being crystalline are preferable, and, with such polymers, the improvements conferred by the invention may be conspicuously achieved. Moreover, for the polypropylene-based resins, homopolymers of propylene or copolymers such as random copolymers of propylene with one or more other olefins, or a block copolymer of propylene with one or more other olefins, may be used. As examples of other olefins that can be copolymerized with propylene, 1-olefins with a carbon atom content of not more than 10 are preferred, such as ethylene, 1-butene, 1-pentene, 3-methyl-1-butene, 1-hexene, 4-methyl-1-pentene, 1-octene and/or 1-decene. Ethylene is generally preferred.

If such components are to be copolymerized with propylene they can be used in an amount of usually not more than 30 mol %, and preferably not more than 15 mol %, in the random copolymer and usually not more than 50 mol %, and preferably not more than 30 mol %, in the block copolymer.

The production of these polymers can include a process of successive polymerisation in two or more polymerisation reactors, usually also varying the production conditions, such as MFR and copolymerisation ratio of components to be copolymerised with propylene, as well as carrying out the process in only one polymerisation reactor.

As for the processes for polymerising polypropylene-based resins, slurry polymerisation, bulk polymerisation, gas phase polymerisation, etc. can be mentioned.

Moreover, a Ziegler-Natta catalyst such as a $TiCl_3$-type catalyst, Ti catalyst supported on a magnesium compound carrier, etc. can generally be used for polymerisation, but, even with a polymer polymerised with any catalyst type other than these, the invention can still be put into effect. However, the extent of any benefits can differ depending on the catalyst type used for polymerisation, and polypropylene-based resins polymerised with catalysts containing magnesium, titanium and a halogen, in particular Ziegler-Natta catalysts, give better results.

The polymerised polypropylene-based resin will usually contain around 1 to 1000 ppm by weight of inorganic materials irrespective of the polymerisation catalyst and polymerisation process employed or the existence of post-treatment processes such as deashing and extraction, although the benefits of the invention may still be realised despite the existence of such post-treatment processes.

A catalyst containing magnesium, titanium and a halogen will usually be a catalyst of a titanium compound supported on magnesium halide compound.

Examples of such magnesium halide compounds include magnesium dihalide, oxymagnesium halide, alkoxymagnesium halide and compounds of dialkoxymagnesium treated with a halogen-containing compound, e.g. titanium tetrahalide, an alkylaluminium dihalide, aluminium trihalide and/or boron trihalide (here alkoxy and alkyl groups have a carbon atom content of from 1 to 8).

Furthermore, compounds (eg obtained by reaction in homogenous solutions) obtainable by adding an oxygen-containing organic compound or titanium (such as titanium alkoxide), to metallic magnesium and to hydroxylated organic compound and/or electron-donating compound such as organic ester with aluminium halide can also be used.

Suitable hydroxylated organic compounds that can be used in the reaction include alcohols, such as ethanol and/or 2-ethylhexanol, and organic silanols, such as trimethylsilanol and triphenylsilanol. For the electron-donating compounds, esters such as ethyl acetate and diisobutyl phthalate, ethers, ketones, amides, etc. can be employed. Also, for preparing the oxygen-containing organic compound of titanium, tetraethyoxy-aluminium, an aluminium halide, ethylaluminum dichloride or i-butyl-aluminium dichloride can be employed.

By reacting a magnesium halide compound thus obtained with, for example, an electron-donor compound and titanium halide compound, the objective catalyst can be prepared. Suitable electron-donatable compounds include esters, such as ethyl acetate and diisobutyl phthalate, ethers, ketones and amides. As the titanium halide compound, titanium tetrachloride can be used.

The polypropylene-based resin composition of the invention is thus essentially the polypropylene-based resin previously mentioned and at least one of benzoic acid or a derivative thereof of formula I or benzoic anhydride or a derivative thereof of formula II.

Compounds of formula I are represented by the following general formula:

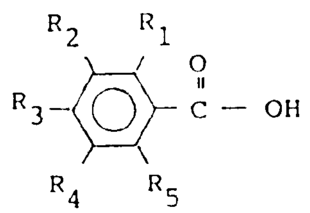

I

wherein each of $R_1$ to $R_5$ individually represent a hydrogen or halogen atom, a $C_{1-8}$ alkyl, $C_{1-8}$ alkoxy, trihalogenomethyl, hydroxy, amino, di ($C_{1-5}$) alkylamino, nitro or phenyl group.

Preferably any of $R_1$ to $R_5$ (such as just $R_3$) represent a $C_{1-8}$ alkyl group, eg. butyl. In some compounds only $R_3$ represents a moiety other than a hydrogen atom. Compounds of formula II, namely a benzoic anhydride or a derivative thereof, are represented by the following general formula:

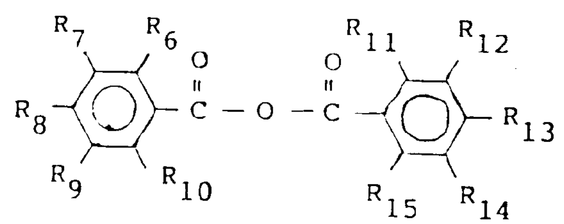

II

wherein each of $R_5$ to $R_{15}$ individually represent a hydrogen or halogen atom, a $C_{1-8}$ alkyl, $C_{1-8}$ alkoxy, trihalogenomethyl, hydroxy, amino, di ($C_{1-5}$) alkylamino, nitro or phenyl group.

Suitably $R_{11}$ to $R_{15}$ represent hydrogen atoms. In some compounds only $R_8$ may represent a moiety other than a hydrogen atom. Preferably any of $R_6$ to $R_{10}$ represent a $C_{1-8}$ alkyl group, eg. butyl.

Here, the alkyl groups with from 1 to 8 carbon atoms in the compounds of general formula I or II, include straight chain alkyl groups such as methyl, ethyl, propyl, butyl, amyl(pentyl), hexyl, heptyl, octyl, and branched alkyl groups such as i-propyl, 1-methylpropyl, t-butyl, 3-methylamyl, 2-ethylhexyl and 2,4-dimethylhexyl.

In the alkoxy groups with from 1 to 8 carbon atoms straight chain alkoxy groups such as methoxy, ethoxy, propyloxy, butoxy, pentyloxy, hexyloxy, heptyloxy, and octyloxy and branched alkoxy groups such as i-propyloxy, t-butoxy, 2-ethylbutoxy and 4-ethylhexyloxy are included.

Preferred halogen atoms include fluorine, chlorine, bromine and iodine. Suitable trihalogenomethyl groups include trifluoromethyl, trichloromethyl, tribromomethyl and triiodomethyl. Acceptable dialkylamino groups (having alkyl groups with from 1 to 5 carbon atoms) include, for example, dimethylamino, dipropylamino, di-i-butylamino, methylethylamino and ethyl-t-butylamino.

Specifically preferred examples of benzoic acid compounds include benzoic acid, p-methylbenzoic acid, m-methylbenzoic acid, o-methylbenzoic acid, p-ethyl-benzoic acid, o-amylbenzoic acid, p-octylbenzoic acid, p-propylbenzoic acid, p-i-propylbenzoic acid, p-t-butylbenzoic acid, m-t-butylbenzoic acid, p-2-ethylhexylbenzoic acid, p-methyoxybenzoic acid, m-propyloxybenzoic acid , p-t-butoxy-benzoic acid, p-fluorobenzoic acid, m-fluorobenzoic acid, o-chlorobenzoic acid, m-chlorobenzoic acid, p-chlorobenzoic acid, p-bromobenzoic acid, m-iodobenzoic acid, p-trifluoromethylbenzoic acid, m-tribromoethylbenzoic acid, p-hydroxybenzoic acid, p-aminobenzoic acid, p-dimethylaminobenzoic acid, p-di-t-butylaminobenzoic acid, p-nitrobenzoic acid, p-phenylbenzoic acid, 2-methyl-3-ethylbenzoic acid, 2,4-di-t-butylbenzoic acid, 2,6-dimethylbenzoic acid,

2-propyl-6-amylbenzoic acid, 2,6-di-i-propylbenzoic acid, 3,4-diethylbenzoic acid, 3,5-dimethylbenzoic acid, 3,5-dibutylbenzoic acid, 2,4,5-trioctylbenzoic acid, 2,4,6-trimethylbenzoic acid, 4-t-butyl-2,6-dimethylbenzoic acid, 2,4-di-t-butyl-5-methyl-6-i-propylbenzoic acid, pentapropylbenzoic acid, 2,3-dipropyloxybenzoic acid, 2,3,5-trioctyloxybenzoic acid, 2-methoxy-4-propyloxy-5-ethoxybenzoic acid, 2,4,5,6-tetrabutoxybenzoic acid, 2,3-difluorobenzoic acid, 2,6-dichlorobenzoic acid, 3-fluoro-5-chlorobenzoic acid, 2-fluoro-3-bromo-6-chlorobenzoic acid, 2,4,6-trifluorobenzoic acid, pentafluorobenzoic aicd, 2,4-diaminobenzoic acid, 2,5-diphenylbenzoic acid, 2,6-dihydroxybenzoic acid, 3,5-dinitrobenzoic acid, 2,3,4-trihydroxybenzoic acid, 2,4,5-triaminobenzoic acid, 2,4,5,6-tetrahydroxybenzoic acid, 2-methyl-3-ethoxybenzoic acid, 2-methyl-6-fluorobenzoic acid, 2-propyl-3-chloro-5-hydroxybenzoic acid,4-phenyl-2,5-di-t-butylbenzoic acid, 2,4-dibutyoxy-6-aminobenzoic acid and 2,5-diethyl-4-nitro-6-methoxy-benzoic acid. Among such benzoic acid compounds, p-i-propylbenzoic acid, p-t-butyl-benzoic acid and 2,6-dimethylbenzoic acid are preferable from the point of improving rigidity or transparency.

Preferred examples of acid anhydrides of benzoic acid, or benzoic acid anhydride compounds include benzoic anhydride, o-methyl-benzoic anhydride, p-methylbenzoic anhydride, m-ethylbenzoic anhydride, p-heptylbenzoic anhydride, p-i-propylbenzoic anhydride, p-t-butylbenzoic anhydride, p-ethoxybenzoic anhydride, m-1-methylpropyloxybenzoic anhydride, p-fluorobenzoic anhydride, o-bromobenzoic anhydride, p-trifluoromethylbenzoic anhydride, p-hydroxybenzoic anhydride, m-aminobenzoic anhydride, p-dimethylaminobenzoic anhydride, p-nitrobenzoic anhydride, p-phenylbenzoic anhydride, 2-methyl-3-ethylbenzoic anhydride, 2,4-di-t-butylbenzoic anhydride, 2,6-dimethylbenzoic anhydride, 2,4,6-trimethylbenzoic anhydride, 2,4-di-t-butyl-5-methyl-6-i-propylbenzoic anhydride, 2,4-diethoxybenzoic anhydride, 2,4,6-trimethoxybenzoic anhydride, 2,6-difluorobenzoic anhydride, 2,4,5,6-tetraiodobenzoic anhydride, 2,5-diphenylbenzoic anhydride, 2,3,4-trihydroxybenzoic anhydride, 2-methyl-6-fluorobenzoic anhydride and 2,4-dibutoxy-6-aminobenzoic anhydride, as well as condensates of benzoic acid compounds having different substituents such as condensates of p-methylbenzoic acid with m-i-propylbenzoic acid, o-chlorobenzoic acid with m-hydroxybenzoic acid, 2,3-dimethylbenzoic acid with 2-methoxy-4-propyloxy-5-ethoxybenzoic acid, and 2,3,4-trifluorobenzoic acid with 2-amino-4,6-dihydroxybenzoic acid. Among such acid anhydrides of benzoic acid compounds, p-t-butylbenzoic anhydride is preferable from the point of view of improving rigidity or transparency.

The amount of benzoic acid compound or benzoic acid anhydride compound to be added to polypropylene-based resin is suitably from 0.001 to 10.0 parts by weight, preferably from 0.01 to 10.0 parts by weight. If the amount is under 0.001 parts by weight, the improvements in rigidity or transparency may be poor, and, if the amount is above 10.0 parts by weight, problems such as sticking may occur, resulting in products of decreased commercial value.

Moreover, as additives for the composition of the invention, various phenol-based, phosphorous ester-based and thioether-based anti-oxidants, acid acceptors such as metal salts of fatty acids, metal salts of hydroxy fatty acids, metal salt of alkyllactic acids and hydrotalcite, ultraviolet absorbers of benzophenone type, benzotriazole type, salicylate type, etc., hindered amine type light stabilizers, lubricants, antiblock agents, antistatic agents, nucleating agents such as metal salts of organic acids and sorbitol-based products, dispersants, peroxide:, pigments, etc. can be employed as additives for the polyolefins commonly used. In addition, for improving the physical properties of mouldings and other articles, it is also possible to blend resins such as polyolefins, polyamides and polyesters into the composition of the invention.

For the preparation of the composition of the first aspect, it may only be necessary to formulate from 0.001 to 10.0 parts by weight, and preferably from 0.01 to 10.0 parts by weight, of the benzoic acid compound or of benzoic acid anhydride compound to 100 parts by weight of the polypropylene-based resin, in order to add around from 0.001 to 1.0 parts by weight of each usual stabilizer, for example, pentaerythrityl-tetrakis[3-(3,5-di-t-butyl-4-hydroxyphenyl)propionate], tris(2,4-di-t-butylphenyl)-phosphite and calcium stearate, though the invention is not particularly limited to these, and to knead this composition under heat at a temperature not lower than the melting point of the polypropylene-based resin using a suitable kneader such as rollers, a plastomill or an extruder.

The resin composition thus obtained can be used as a moulding material and usual moulding processes such as injection moulding, extrusion moulding and compression moulding are applicable. Moreover, it is also possible to obtain such mouldings by a method of preparing high-additive level resins of the composition beforehand and adding these at the time of moulding or re-pelletairisation, that is, by the addition through master batches.

With the polypropylene-based resin composition of the invention, it is possible to surprisingly improve the rigidity or transparency of mouldings. It is therefore suitable for products or shaped articles requiring rigidity or transparency, for example, injection mouldings such as a cap and dress case, blow products such as bottles, sheet mouldings such as binders and (eg. video) cassette cases, stretched or nonstretched film mouldings such as packaging films, and the like.

A second aspect of the present invention relates to a process for the preparation of a polypropylene-based resin composition, the process comprising admixing from 0.001 to 10.0 parts by weight, based on 100 parts of the polypropylene resin, of a benzoic acid compound and/or a benzoic acid anhydride compound, where the benzene rings in either or both of the benzene rings in either or both of the compounds may or may not be substituted, with a polypropylene resin.

Preferably during mixing the resin is at a temperature at, or above, its melting point.

A third aspect relates to a process for the preparation of a shaped article (that may be at least partially transparent) or film or sheet, the process comprising moulding, and if necessary also heating, a resin composition of the first aspect or as prepared in the second aspect. Moulding can be by injection, compression, extrusion and/or by stretching. Preferably heating is employed, for example at a temperature of from 200°C to 300°C, eg. from 230°C to 250°C.

A fourth aspect of the invention relates to a shaped article, film or sheet preparable by a process of the third aspect.

Preferred features and characteristics of one aspect are as for another *mutatis mutandis*.

The invention will now be described by way of example with reference to the accompanying Examples which are provided as an illustration but are not to be construed as limiting the invention.

EXAMPLES 1 TO 11

To an ethylene-propylene random copolymer: PP-A(content of ethylene 4.9 mol %, MFR 10.1 g/10 min) polymerized in the gas phase using a Ti catalyst supported on a magnesium compound carrier, prepared by the method described in Example 1 of Japanese Patent Kokai Sho 64-105 publication, 0.05 parts by weight of Irganox 1010 (made by Ciba-Geigy Ltd), pentaerythrityl-tetrakis[3-(3,5-di-t-butyl-4-hydroxyphenyl) propionate], 0.1 part by weight of Irgafos 168 (made by Ciba-Geigy Ltd), tris-(2,4-di-t-butylphenyl)phosphite, 0.1 part by weight of calcium stearate S (made by Nippon Oil and Fats Co., Ltd), calcium stearate, and one of each of the following commercial benzoic acid or benzoic anhydride compound:

BA :benzoic acid (made by Wako Pure Chemical Industries, Ltd),
p-$CH_3$ :p-methylbenzoic acid (made by Wako Pure Chemical Industries, Ltd),
o-$CH_3$ :o-methylbenzoic acid (made by Tokyo Kasei Kogyo Co., Ltd),
p-$C_2H_5$ :p-ethylbenzoic acid (made by Tokyo Kasei Kogyo Co., Ltd),
p-i$C_3H_7$ :p-i-propylbenzoic acid (made by Tokyo Kasei Kogyo Co., Ltd),
p-t$C_4H_9$ :p-t-butylbenzoic acid (made by Wako Pure Chemical Industries, Ltd),
p-F :p-fluorobenzoic acid (made by Tokyo Kasei Kogyo Co., Ltd),
p-$NH_2$ :p-aminobenzoic acid (made by Wako Pure Chemical Industries, Ltd),
p-$NO_2$ :p-nitrobenzoic acid (made by Wako pure Chemical Industries, Ltd),
p-Cl :p-chlorobenzoic acid (made by Wako pure Chemical Industries, Ltd), and
BAah :benzoic anhydride (made by Wako pure Chemical Industries, Ltd)

in the parts by weight shown in Table 1 were added. This was pelletized at 240°C using 25mm diameter single-screw extruder. the pelletized resin was moulded into 1mm thick sheet with a press moulding machine heated to 230°C. Using this sheet, haze (JIS K-7105) and stiffness (JIS K-7106) were measured. The results are shown in Table 1.

COMPARATIVE EXAMPLE A

The same resin was prepared as in Example 1 except that benzoic acid was omitted and the evaluation was made by similar method. The results are shown in Table 1.

Table 1

| | | Resin used | Additive | Addition level (parts by weight) | Haze (%) | Stiffness ($kgf/cm^2$) |
|---|---|---|---|---|---|---|
| Example | 1 | PP-A | BA | 0.15 | 23.6 | 10300 |
| | 2 | PP-A | $p-CH_3$ | 0.15 | 29.4 | 10400 |
| | 3 | PP-A | $o-CH_3$ | 0.15 | 26.6 | 9900 |
| | 4 | PP-A | $p-C_2H_5$ | 0.15 | 28.4 | 9800 |
| | 5 | PP-A | $p-iC_3H_7$ | 0.15 | 18.8 | 9800 |
| | 6 | PP-A | $p-tC_4H_9$ | 0.15 | 15.2 | 10300 |
| | 7 | PP-A | p-F | 0.15 | 25.9 | 10000 |
| | 8 | PP-A | $p-NH_2$ | 0.15 | 45.2 | 10500 |
| | 9 | PP-A | $p-NO_2$ | 0.15 | 47.7 | 10200 |
| | 10 | PP-A | $p-CH_3/p-Cl$ | 0.075/0.075 | 30.4 | 10300 |
| | 11 | PP-A | BAah | 0.15 | 26.9 | 10700 |
| Comparative example | A | PP-A | ----- | ---- | 55.5 | 9200 |

EXAMPLES 12 TO 16

Using a Ti catalyst supported on a magnesium compound carrier prepared as described in Example 1, an ethylene-propylene random copolymer: PP-B (content of ethylene 6.6 mol %, MFR 5.3 g/10 min) was obtained by a gas phase process. Each of the following commercial benzoic acid compounds:

| | |
|---|---|
| p-di$CH_3$N | :p-dimethylaminobenzoic acid (made by Tokyo Kasei Kogyo Co., Ltd.), |
| p-$CF_3$ | :p-trifluoromethylbenzoic acid (made by Wako Pure Chemical Industries, Ltd.), |
| 2,6-$CH_3$ | :2,6-dimethylbenzoic acid (made by Aldrich Chem. Co.), |
| 2,4,6-$CH_3$ | :2,4,6-trimethylbenzoic acid (made by Aldrich Chem. Co.), and |
| 2,6-F | :2,6-difluorobenzoic acid (made by Tokyo Kasei Kogyo Co., Ltd.), |

their parts by weight shown in Table 2, were added in place of benzoic acid in Example 1 to the polymer and the evaluation was made by a similar method to that in Example 1. The results are shown in Table 2.

COMPARATIVE EXAMPLE B

The same resin was used as in Example 12 except that p-dimethylaminobenzoic acid was not added and the evaluation was made by a similar method. The results are shown in Table 2.

Table 2

| | | Resin used | Additive | Addition level (parts by weight) | Haze (%) | Stiffness ($kgf/cm^2$) |
|---|---|---|---|---|---|---|
| Example | 12 | PP-B | p-di$CH_3$N | 0.15 | 38.8 | 8400 |
| | 13 | PP-B | p-$CF_3$ | 0.15 | 55.7 | 8000 |
| | 14 | PP-B | 2,6-$CH_3$ | 0.15 | 14.1 | 8400 |
| | 15 | PP-B | 2,4,6-$CH_3$ | 0.15 | 48.9 | 8000 |
| | 16 | PP-B | 2,6-F | 0.15 | 47.9 | 8400 |
| Comparative example | B | PP-B | ---------- | ---- | 58.6 | 7500 |

EXAMPLES 17 TO 21

Example 1 was repeated except that commercial p-t-butylbenzoic acid (p-$tC_4H_9$), in the parts by weight shown in Table 3, was used in place of benzoic acid to an ethylene-propylene random copolymer: PP-C (content of ethylene 6.3 mol %, MFR 6.5 g/10 min) polymerised in the gas phase using a Ti catalyst supported on a magnesium compound carrier prepared as described in Example 1. The evaluation was made by the same method as in Example 1. The results are shown in Table 3.

COMPARATIVE EXAMPLE C

The same resin was used as in Example 17 except that p-t-butylbenzoic acid was not added and the evaluation was made by a similar method. The results are shown in Table 3.

Table 3

| | | Resin used | Additive | Addition level (parts by weight) | Haze (%) | Stiffness (kgf/cm²) |
|---|---|---|---|---|---|---|
| Example | 17 | PP−C | p−t$C_4H_9$ | 0.05 | 46.9 | 8800 |
| | 18 | PP−C | p−t$C_4H_9$ | 0.1 | 16.8 | 9000 |
| | 19 | PP−C | p−t$C_4H_9$ | 0.5 | 19.3 | 9000 |
| | 20 | PP−C | p−t$C_4H_9$ | 1.0 | 22.5 | 8800 |
| | 21 | PP−C | p−t$C_4H_9$ | 3.0 | 46.2 | 8800 |
| Comparative example | C | PP−C | ------- | ---- | 52.9 | 7600 |

EXAMPLES 22 TO 30

According to the method described in Journal of American Chemical Society, **74:** 4110, (1952), the following acid anhydrides of a benzoic acid compound were prepared from commercial benzoic acid-based compounds.

| | |
|---|---|
| p-$CH_3$ah | :p-methylbenzoic anhydride, |
| p-i$C_3H_7$ah | :p-i-propylbenzoic anhydride, |
| p-t$C_4H_9$ah | :p-t-butylbenzoic anhydride, |
| 2,4,6-$CH_3$ah | :2,4,6-trimethylbenzoic anhydride, |
| p-Fah | :p-fluorobenzoic anhydride, and |
| p-di$CH_3$Nah | :p-dimethylaminobenzoic anhydride. |

Example 1 was repeated except that each of these compounds, in parts by weight shown in Table 4, was added in place of benzoic acid to an ethylene-propylene random copolymer: PP-D (content of ethylene 5.3 mol %, MFR 9.2 g/10 min) polymerised in a gas phase using a Ti catalyst supported on a magnesium compound carrier prepared as described in Example 1, the evaluation being made by the same method as in Example 1. The results are shown in Table 4.

COMPARATIVE EXAMPLE D

The same resin was used as in Example 22 except that p-methylbenzoic anhydride was not added and the evaluation was made by a similar method. The results are shown in Table 4.

Table 4

| | | Resin used | Additive | Addition level (parts by weight) | Haze (%) | Stiffness ($kgf/cm^2$) |
|---|---|---|---|---|---|---|
| Example | 22 | PP−D | p−$CH_3$ah | 0.3 | 28.2 | 9700 |
| | 23 | PP−D | p−i$C_3H_7$ah | 0.3 | 32.0 | 9500 |
| | 24 | PP−D | p−t$C_4H_9$ah | 0.15 | 26.3 | 9700 |
| | 25 | PP−D | p−t$C_4H_9$ah | 0.3 | 15.9 | 9400 |
| | 26 | PP−D | p−t$C_4H_9$ah | 0.5 | 15.3 | 9300 |
| | 27 | PP−D | p−t$C_4H_9$ah | 1.0 | 22.2 | 9400 |
| | 28 | PP−D | 2,4,6−$CH_3$ah | 0.3 | 38.8 | 10000 |
| | 29 | PP−D | p−Fah | 0.3 | 53.6 | 9600 |
| | 30 | PP−D | p−di$CH_3$Nah | 0.3 | 51.5 | 10000 |
| Comparative example | D | PP−D | −−−−−−−−− | −−−− | 54.7 | 8400 |

EXAMPLE 31

Example 1 was repeated except that commercial p-t-butylbenzoic acid (p-t$C_4H_9$), in parts by weight shown in Table 5, was added in place of benzoic acid to an ethylene-propylene random copolymer: PP-E (content of ethylene 1.8 mol %, MFR 1.4 g/10 min) polymerised in a gas phase using a Ti catalyst supported on a magnesium compound carrier prepared as in Example 1, the evaluation being made by the same method to Example 1. The results are shown in Table 5.

EXAMPLE 32

Example 31 was repeated except that 0.01 part by weight of Perkadox 14 (made by Kayaku Nury Co.), 1,3-bis(t-butylperoxy-i-propyl) benzene was additionally used in the composition of Example 31. The same resin was used as in Example 31 and the evaluation was made by a similar method. The results are shown in Table 5. The MFR of pelletised resin was 3.1 g/10 min.

EXAMPLE 33

Example 1 was repeated except that commercial p-t-butylbenzoic acid (p-t$C_4H_9$), in parts by weight shown in Table 5, was used in place of benzoic acid with a polypropylene homopolymer: PP-F (MFR 7.4 g/10 min) polymerised in a gas phase using a Ti catalyst supported on a magnesium compound carrier prepared as described in Example 1, the evaluation being made by the same method to Example 1. The results are shown in Table 5.

EXAMPLE 34

Example 1 was repeated except that p-t-butylbenzoic anhydride (p-t$C_4H_9$ah), prepared by the method shown in Example 22, in parts by weight shown in Table 5, was used in place of benzoic acid in Example 1 with a polypropylene homopolymer: PP-G (MFR 1.2 g/10 min) polymerised in a gas phase using a Ti catalyst supported on a magnesium compound carrier prepared as described in Example 1, the evaluation being made by the same method to Example 1. The results are shown in Table 5.

EXAMPLES 35 AND 36

Example 1 was repeated except that commercial p-t-butylbenzoic acid (p-t-$C_4H_9$) or p-t-butylbenzoic anhydride (p-t$C_4H_9$ah), prepared by the method of Example 22, in parts by weight shown in Table 5, was used in place of benzoic acid with an ethylene-propylene random copolymer: PP-H (content of ethylene 4.7 mol %, MFR 7.0 g/10 min) polymerised in slurry using a $TiCl_3$ type catalyst prepared by the method described in Example 1 of Japanese Patent Kokai Sho 47-34478 publication, the evaluation being made by the same method in Example 1. The results are shown in Table 5.

EXAMPLE 37

Example 1 was repeated except that commercial p-t-butylbenzoic acid (p-t$C_4H_9$), in parts by weight shown in Table 5, was used in place of benzoic acid with a propylene homopolymer: PP-I (MFR 10.7 g/10 min) polymerised in slurry using a $TiCl_3$ type catalyst prepared by the method described in Example 1 of Japanese Patent Kokai Sho 47-34478 publication, the evaluation being made by the same method to Example 1. The results are shown in Table 5.

EXAMPLES 38 AND 39

Example 1 was repeated except that commercial p-t-butylbenzoic acid (p-t-$C_4H_9$) or p-t-butylbenzoic anhydride (p-t$C_4H_9$ah), prepared by the method of Example 22, in parts by weight shown in Table 5, was used in place of benzoic acid with a propylene homopolymer: PP-J (MFR 10.6 g/10 min) polymerised in a gas phase using a $TiCl_3$ type catalyst prepared by the method described in Example 1 of Japanese Patent Kokai Sho 47-34478 publication, the evaluation being made by the same method in Example 1. The results are shown in Table 5.

COMPARATIVE EXAMPLE E

Example 31 was repeated except that p-t-butylbenzoic acid was not added and the evaluation was made by a similar method. The results are shown in Table 5.

COMPARATIVE EXAMPLE F

Example 33 was repeated except that p-t-butylbenzoic acid was not added and the evaluation was made by a similar method. The results are shown in Table 5.

COMPARATIVE EXAMPLE G

Example 34 was repeated except that p-t-butylbenzoic anhydride was not added and the evaluation was made by a similar method. The results are shown in Table 5.

COMPARATIVE EXAMPLE H

Example 35 was repeated except that p-t-butylbenzoic acid was not added and the evaluation was made by a similar method. The results are shown in Table 5.

COMPARATIVE EXAMPLE I

Example 37 was repeated except that p-t-butylbenzoic acid was not added and the evaluation was made by a similar method. The results are shown in Table 5.

COMPARATIVE EXAMPLE J

Example 38 was repeated except that p-t-butylbenzoic acid was not added and the evaluation was made by a similar method. The results are shown in Table 5.

Table 5

| | | Resin used | Additive | Addition level (parts by weight) | Haze (%) | Stiffness ($kgf/cm^2$) |
|---|---|---|---|---|---|---|
| Examples | 31 | PP−E | p−t$C_4H_9$ | 0.15 | 16.5 | 12500 |
| | 32 | PP−E | p−t$C_4H_9$ | 0.15 | 14.3 | 12500 |
| | 33 | PP−F | p−t$C_4H_9$ | 0.15 | 23.6 | 15300 |
| | 34 | PP−G | p−t$C_4H_9$ah | 0.3 | 17.3 | 15100 |
| | 35 | PP−H | p−t$C_4H_9$ | 0.15 | 38.2 | 10800 |
| | 36 | PP−H | p−t$C_4H_9$ah | 0.5 | 35.2 | 10800 |
| | 37 | PP−I | p−t$C_4H_9$ | 0.15 | 42.2 | 15100 |
| | 38 | PP−J | p−t$C_4H_9$ | 0.15 | 40.3 | 15600 |
| | 39 | PP−J | p−t$C_4H_9$ah | 0.5 | 27.0 | 15800 |
| Comparative Examples | E | PP−E | --------- | ---- | 57.8 | 10800 |
| | F | PP−F | --------- | ---- | 63.9 | 12800 |
| | G | PP−G | --------- | ---- | 57.0 | 12000 |
| | H | PP−H | --------- | ---- | 57.3 | 9100 |
| | I | PP−I | --------- | ---- | 62.8 | 12700 |
| | J | PP−J | --------- | ---- | 64.3 | 12900 |

EXAMPLES 40 TO 43

To an ethylene-propylene random copolymer: PP-K (content of ethylene 6.2 mol %, MFR 7.3 g/10 min) polymerised in a gas phase using a Ti catalyst supported on a magnesium compound carrier prepared as described in Example 1, 0.05 parts by weight of Irganox 1010 (made by Ciba-Geigy Ltd.), pentaerythrityl-tetrakis [3-(3,5-di-t-butyl-4-hydroxyphenyl)-propionate], 0.1 part by weight of Irgafos 168 (made by Ciba-Geigy Ltd.), tris(2,4-di-t-butylphenyl) phosphite, 0.1 part by weight of calcium stearate S (made by Nippon Oil and Fats Co., Ltd.), calcium stearate, and commercial p-t-butylbenzoic acid (p-t$C_4H_9$) or p-t-butylbenzoic anhydride (p-t$C_4H_9$ah) prepared by the method of Example 22 in parts by weight shown in Table 6 were added, which was pelletised at 230°C using 50 mm diameter single-screw extruder after mixing in a Henschel mixer. The pelletised resin was subjected to injection moulding at 250°C (temperature of the mould was 50°C), and the haze (JIS K-7105) of a 2 mm thick specimen, flexural modulus (JIS K-7203), tensile yield strength (JIS K-7113) and Izod impact strength (JIS K-7710) were measured. The results are shown in Table 6.

COMPARATIVE EXAMPLE K

Example 40 was repeated except that p-t-butylbenzoic acid was not added and the evaluation was made by a similar method. The results are shown in Table 6.

Table 6

| | | Resin used | Additive | Addition level (parts by weight) | Haze (%) | Flexural modulus ($kgf/cm^2$) | Tensile yield strength ($kgf/cm^2$) | Izod impact strength ($kgf·cm/cm^2$) | |
|---|---|---|---|---|---|---|---|---|---|
| | | | | | | | | 23℃ | 0℃ |
| Example | 40 | PP-K | $p-tC_4H_9$ | 0.15 | 17 | 10100 | 285 | 5.9 | 2.4 |
| | 41 | PP-K | $p-tC_4H_9ah$ | 0.15 | 39 | 9900 | 280 | 6.1 | 2.4 |
| | 42 | PP-K | $p-tC_4H_9ah$ | 0.3 | 22 | 10600 | 280 | 5.8 | 2.4 |
| | 43 | PP-K | $p-tC_4H_9ah$ | 0.5 | 15 | 10700 | 280 | 6.0 | 2.3 |
| Comparative example | K | PP-K | --------- | ---- | 66 | 8500 | 260 | 4.8 | 2.5 |

## EXAMPLES 44 TO 48

Example 40 was repeated except that commercial p-t-butylbenzoic acid (p-t$C_4H_9$) or p-t-butylbenzoic anhydride (p-t$C_4H_9$ah) prepared by the method of Example 22, in parts by weight shown in Table 5, were added in place of p-t-butylbenzoic acid to an ethylene-propylene block copolymer: PP-L (content of ethylene 13.5 mol %, MFR 5.4 g/10 min) polymerised in a gas phase using a Ti catalyst supported on a magnesium compound carrier prepared as described in Example 1, the evaluation being made by the same method to that in Example 40. The results are shown in Table 7.

## COMPARATIVE EXAMPLE L

Example 44 was repeated except that p-t-butylbenzoic acid was not added and the evaluation was made by a similar method. The results are shown in Table 7.

Table 7

| | | Resin used | Additive | Addition level (parts by weight) | Flexural modulus ($kgf/cm^2$) | Tensile yield strength ($kgf/cm^2$) | Izod impact strength ($kgf \cdot cm/cm^2$) | |
|---|---|---|---|---|---|---|---|---|
| | | | | | | | 23℃ | −20℃ |
| Example | 44 | PP−L | $p-tC_4H_9$ | 0.15 | 12400 | 265 | 11.1 | 4.8 |
| | 45 | PP−L | $p-tC_4H_9$ | 0.3 | 13500 | 275 | 9.6 | 5.0 |
| | 46 | PP−L | $p-tC_4H_9ah$ | 0.15 | 10700 | 250 | 11.6 | 4.8 |
| | 47 | PP−L | $p-tC_4H_9ah$ | 0.3 | 10300 | 245 | 11.8 | 4.9 |
| | 48 | PP−L | $p-tC_4H_9ah$ | 0.5 | 12000 | 250 | 11.7 | 5.1 |
| Comparative example | L | PP−L | --------- | ---- | 9400 | 245 | 10.9 | 4.8 |

From the Examples shown in Tables 1 to 7, it is evident that, by adding a benzoic acid compound or a benzoic acid anhydride compound, the rigidity or transparency or both can be remarkably improved.

Moreover, from Example 10 in Table 1, it can be seen that the combined use of two benzoic acid compounds also accomplishes this objective.

## Claims

1. A polypropylene-based resin composition containing from 0.001 to 10.0 parts by weight of a benzoic acid compound with or without substituent(s) on its benzene ring and/or a benzoic acid anhydride acid compound with or without substituents(s) on its benzene ring(s) to 100 parts by weight of the polypropylene-based resin.

2. A resin as claimed in claim 1 wherein the compound(s) is present at from 0.01 to 10 parts by weight.

3. A resin according to claim 1 or 2 wherein the compound(s) is present at from 0.05 to 3.0 parts by weight.

4. A polypropylene-based resin composition according to any of claims 1 to 3 containing from 0.001 to 10.0 parts by weight of:

   at least one compound which is benzoic acid or a nucleus-substituted derivative thereof of general formula:

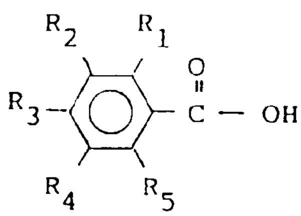

I

wherein each of $R_1$ to $R_5$ individually represent a hydrogen or halogen atom, a $C_{1-8}$alkyl, $C_{1-8}$alkoxy, trihalogenomethyl, hydroxy, amino, di($C_{1-5}$)alkylamino, nitro, or phenyl group; and/or

   at least one compound which is benzoic anhydride or a nucleus-substituted derivative thereof of the general formula:

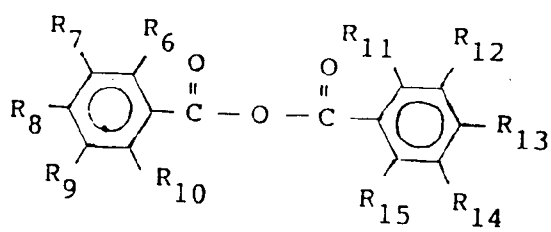

II

wherein each of $R_5$ to $R_{15}$ individually represent a hydrogen or halogen atom, a $C_{1-8}$alkyl, $C_{1-8}$alkoxy, trihalogenomethyl, hydroxy, amino, di($C_{1-5}$)alkylamino, nitro or phenyl group;

   to 100 parts by weight of the polypropylene-based resin.

5. A composition according to any of claims 1 to 4 wherein at least one of the substituents in a nucleus-substituted derivative of benzoic acid and/or benzoic acid anhydride is a $C_{1-8}$alkyl group, the remaining groups all being hydrogen atoms.

6. A composition according to any of claims 1 to 4 wherein the nucleus-substituted derivative of the benzoic acid is p-i-propylbenzoic acid, p-t-butylbenzoic acid and/or 2, 6-dimethylbenzoic acid.

7. A composition according to any of claims 1 to 4 wherein the nucleus-substituted derivative of benzoic

anhydride is p-t-butylbenzoic anhydride.

8. A process for the preparation of a polypropylene-based resin composition, the process comprising admixing from 0.001 to 10.0 parts by weight, based on 100 parts of the polypropylene resin, of a benzoic acid compound and/or a benzoic acid anhydride compound, where the benzene rings in either or both of the compounds may or may not be substituted, with a polypropylene resin.

9. A process for the preparation of a shaped article or film or sheet, the process comprising moulding, and if necessary also heating, a resin composition according to any of claims I to 7 or as prepared according to claim 8.

10. A shaped article, film or sheet preparable by a process according to claim 9.

European Patent Office

# EUROPEAN SEARCH REPORT

Application Number

EP 92 30 2894

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-951 158 (SHELL INTERNATIONALE RESEARCH MAATSCHAPPIJ N.V.) 4 March 1964<br>* page 1, column 2, line 61 - page 2, column 1, line 23 *<br>* page 2, column 2, line 89 - line 96 *<br>* example II *<br>* page 6; table II *<br>* example III *<br>* page 8; table III *<br>* claims 1,2,13-15,17-19,26,34-42 * | 1-6,8-10 | C08K5/09<br>C08L23/12 |
| X | GB-A-1 001 709 (IMPERIAL CHEMICAL INDUSTRIES LTD.) 18 August 1965<br>* the whole document * | 1-6,8-10 | |
| X | EP-A-0 211 650 (EL PASO PRODUCTS COMPANY)<br>* examples I,II *<br>* claims 1,4-6 * | 1-4,8-10 | |
| A | EP-A-0 079 506 (MITSUBISHI CHEMICAL INDUSTRIES LTD.)<br>* claims * | 1-10 | |

TECHNICAL FIELDS SEARCHED (Int. Cl.5)

C08K

The present search report has been drawn up for all claims

| Place of search | Date of completion of the search | Examiner |
|---|---|---|
| THE HAGUE | 10 JULY 1992 | ENGEL S.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)